# EUROPÄISCHE PATENTSCHRIFT

(11) **EP 1 557 321 B1**
(45) Veröffentlichungstag und Bekanntmachung des Hinweises auf die Patenterteilung: **18.07.2007**
(21) Anmeldenummer: 05101988.3
(22) Anmeldetag: 09.08.2001
(51) Int. Cl.: B60R 16/02

(54) **Verfahren zur Warnung eines Fahrers eines Fahrzeugs**
Vehicle driver warning procedure
Procédé pour avertir un conducteur d'un véhicule

(30) Priorität: 16.08.2000 DE 10039795
(43) Veröffentlichungstag der Anmeldung: 27.07.2005
(62) Teilanmeldung aus: 01119211.9
(73) Patentinhaber: ROBERT BOSCH GMBH, 70442 Stuttgart (DE)
(72) Erfinder: Knoll, Peter, 76275 Ettlingen (DE)

(56) Entgegenhaltungen:
- DE-A- 19 723 922
- US-A- 5 519 410
- US-A- 5 801 667

## Beschreibung

### Stand der Technik

Die Erfindung geht aus von einem Verfahren zur Warnung eines Fahrzeugführers nach der Gattung des Hauptanspruchs. Es ist bekannt, einen Fahrer durch Warnanzeigen, die vorzugsweise in einem Kombiinstrument vor dem Fahrer angeordnet sind, vor Fehlfunktionen eines Fahrzeugs oder vor sonstigen, gefährlichen kritischen Situationen zu warnen. Hierzu ist bekannt, für die Warnanzeigen mittels Sensoren Fahrzeugfunktionen auszuwerten, z.B. die Dicke der Bremsbeläge, die Kühlwassertemperatur, den Öldruck oder die Außentemperatur. Weiterhin sind Sensoren bekannt, die Hindernisse im Fahrweg vor oder hinter dem Fahrzeug erkennen, so z.B. eine Einparkhilfe oder ein ACC-System (Adaptiv Cruise Control), die mittels elektromagnetischen oder akustischen Sensoren Abstände zu Hindernissen erfassen. Weiterhin sind Verfahren bekannt, bei denen mittels einer Kamera der Fahrweg und die Umgebung des Fahrzeugs überwacht werden, um z.B. ein Verlassen des Fahrwegs durch das Fahrzeug zu detektieren. Ferner sind Systeme bekannt, mit denen ein Fahrer dahingehend überwacht wird, ob er ermüdet oder einschläft. Nachteilig bei diesen Warnvorrichtungen ist, dass ein Fahrer einerseits vor gefährlichen Situationen mehrfach gewarnt wird und andererseits auch bei möglichen Gefahrensituationen gewarnt wird, die der Fahrer längst erkannt hat oder die keine Gefahrensituation für das Fahrzeug darstellen. Liegt z.B. ein Stück Papier oder ein Stück Holz auf der Fahrbahn und weicht der Fahrer kurz über eine Begrenzung der Fahrbahnmarkierung aus, wird er einerseits möglicherweise vor dem Hindernis und andererseits bei dem Überfahren der Fahrbahnbegrenzungsmarkierung gewarnt, obwohl er das Hindernis einerseits gesehen hat sowie die Fahrbahnmarkierung willentlich überfahren hat und andererseits auch durch ein Überfahren des Papiers oder Holzstücks kein Schaden an dem Fahrzeug entstanden wäre. Folglich kann ein Fahrer mit unnötigen Warnungen überhäuft werden, die seine Reizschwelle gegenüber Warnungen durch die Fahrzeugelektronik insgesamt absenken. Eine möglicherweise wichtige Warnung nimmt ein Fahrer dann gegebenenfalls nicht mehr wahr, sodass er trotz eines geeigneten Warnsystems in einer wirklichen Gefahrensituation nicht mehr auf eine Warnung reagiert

Aus der gattungsbildenden DE 197 23 922 A1 ist eine Signalanzeigevorrichtung sowie ein Verfahren zum Anzeigen eines Systemzustands in einem Fahrzeug bekannt. Ein Logikkreis aktiviert dabei ein Signal einer Verzögerungseinheit, wenn eine anstrengende Fahrsituation vorliegt und/oder eine Regelung momentan vom Fahrer betätigt wird. Hierdurch wird ein Fahrer zeitweise von der Präsentation neuer Informationen während der Fahrsituation entlastet, wenn seine Konzentration für andere vorübergehende Aufgaben notwendig ist.

Aus der US 5,801,667 A ist ein Anzeigesystem für ein Fahrzeug bekannt, bei dem eine Blickrichtung eines Fahrers ermittelt wird und eine Warnung auf derjenigen Anzeige des Fahrzeugs dargestellt wird, auf die der Fahrer gerade schaut.

### Vorteile der Erfindung

Das erfindungsgemäße Verfahren mit den Merkmalen des Hauptanspruchs hat demgegenüber den Vorteil, dass vor der Ausgabe einer Warnung eine Aufmerksamkeit des Fahrzeugführers ermittelt wird und dass eine Warnung vor einer kritischen Situation nur bei einer niedrigen Aufmerksamkeit des Fahrers ausgegeben wird. Hierdurch wird ein Fahrer nur vor solchen Gefahren gewarnt, die seiner Aufmerksamkeit wahrscheinlich entgehen, sodass die Anzahl überflüssiger Warnungen reduziert wird. Eingehende Warnungen werden daher von dem Fahrer beachtet, sodass eine effiziente Ausgabe von Warnungen mit einer hohen Akzeptanz durch den Fahrer erreicht wird. Indem Warnungen nur bei einer niedrigen Aufmerksamkeit des Fahrers ausgegeben werden, wird ein Fahrer die ausgegebenen Warnungen vielmehr besonders beachten.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, durch eine Kameravorrichtung ein Bild eines Fahrers zu erfassen und mittels einer Verarbeitung durch eine Recheneinheit auf die Aufmerksamkeit des Fahrers zu schließen, da hierdurch im Gegensatz zu indirekten Methoden, direkt die Aufmerksamkeit und insbesondere der Wachzustand des Fahrers ermittelt wird. Hierbei ist besonders vorteilhaft, die Blickrichtung, die Lidschlagsfrequenz und/oder die Kopfposition des Fahrers zu ermitteln. Eine hohe Lidschlagsfrequenz bzw. geschlossene Augenlider lassen ebenso wie ein gesenkter Kopf auf eine Ermüdung des Fahrers schließen. Vorteilhaft ist dabei, die Blickrichtung dahingehend auszuwerten, dass lediglich der Richtung, in die der Fahrer schaut, eine hohe Aufmerksamkeit zugewiesen wird, während den übrigen Richtungen, in die er nicht schaut und die also außerhalb seines Blickfelds liegen, eine niedrige Aufmerksamkeit zugewiesen wird. Schaut folglich beim Rückwärtsfahren ein Fahrer nach vorne und wird z.B. von einer Abstandsmessungsvorrichtung ein zu niedriger, rückwärtiger Abstand des Fahrzeugs zu einem Hindernis erfasst, so erfolgt neben einer optischen Warnung z.B. mittels einer Leuchtdiodenanzeige sehr früh eine zusätzliche akustische Warnung, z.B. bereits bei einem Abstand von 2 m. Bei einem Fahrer, dessen Blick im Fahrzeug nach hinten gerichtet ist, erfolgt erst bei einem rückwärtigen Abstand von vorzugsweise 50 cm eine zusätzliche, akustische Warnung.

Ferner ist vorteilhaft, insbesondere bei mehreren gleichzeitig auszugebenden Warnungen, die Warnung vor einer kritischen Situation, die im Blickfeld des Fahrers liegt, erst nach einer Warnung vor einer kritischen Situation auszugeben, die außerhalb des Blickfelds des Fahrers liegt.

Denn eine kritische Situation in seinem Blickfeld hat der Fahrer wahrscheinlich bereits ohne eine ausgegebene Warnung erfasst.

Weiterhin ist vorteilhaft, die Aufmerksamkeit eines Fahrers von der Bedienung im Fahrzeug angeordneter Geräte abhängig zu machen. Wird z.B. festgestellt, dass ein Fahrer eine Navigationsvorrichtung programmiert oder eine Autoradioeinheit bedient, so wird ihm für diesen Zeitraum eine niedrigere Aufmerksamkeit zugewiesen. Gleiches gilt für den Fall, dass das im Fahrzeug angeordnete Telefon benutzt wird.

Weiterhin ist vorteilhaft, über Sensoren einen Müdigkeitszustand des Fahrers zu ermitteln, indem vorzugsweise die Körpertemperatur und/oder Pulsfrequenz bestimmt wird. Auch über diese ermittelten, physiologischen Daten ist eine direkte Auskunft über die Aufmerksamkeit des Fahrers möglich.

Um gerade einen Fahrer mit niedriger Aufmerksamkeit erreichen zu können, wird eine Warnung dabei in vorteilhafter Weise akustisch ausgegeben, da so die Blickrichtung des Fahrers nicht auf eine Warnanzeige gerichtet sein muss.

### Zeichnung

Ausführungsbeispiele der Erfindung sind in der Zeichnung dargestellt und in der nachfolgenden Beschreibung näher erläutert. Es zeigen Figur 1 die Anordnung von Sensoren zur Durchführung des erfindungsgemäßen Verfahrens in einem Fahrzeug, Figur 2 eine Schaltung erfindungsgemäßer Sensoren an eine Recheneinheit mit einer Ausgabeeinheit zur Durchführung des erfindungsgemäßen Verfahrens, Figur 3 ein Ausführungsbeispiel für einen Ablauf des erfindungsgemäßen Verfahrens und Figur 4 ein Ausführungsbeispiel für einen Auswerteschritt des erfindungsgemäßen Verfahrens.

### Beschreibung des Ausführungsbeispiels

Das erfindungsgemäße Verfahren kann in einer Vielzahl von Fahrzeugen eingesetzt werden, so z.B. in Schienenfahrzeugen, in Flugzeugen, in Schiffen und in Kraftfahrzeugen. Ferner ist auch eine Verwendung bei einer Fernbedienung von Fahrzeugen oder anderen Maschinen von einem Kommandostand aus möglich. Im Folgenden wird das erfindungsgemäße Verfahren anhand der Ausführung in einem Kraftfahrzeug erläutert. Eine Kombination von Sensoren, die zu einer Erfassung von kritischen Situationen für das Fahrzeug dienen, kann hierbei beliebig gewählt werden. In dem angeführten Ausführungsbeispiel wurde eine vorteilhafte Kombination von Sensoren ausgewählt, bei der jedoch je nach Ausführung des Fahrzeugs weitere Sensoren ergänzt oder auch aus Kostengründen Sensoren weggelassen werden können.

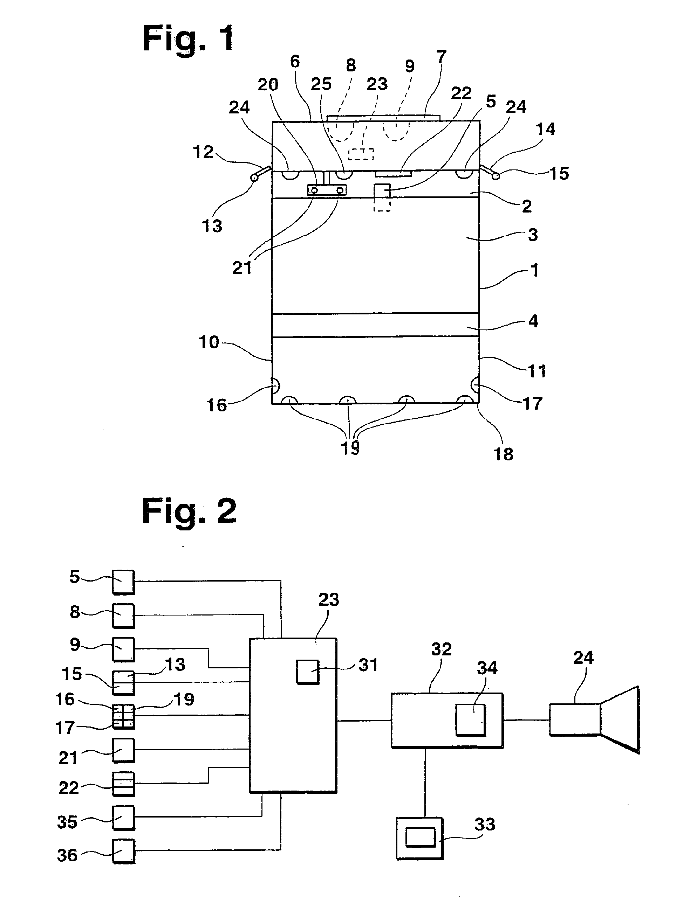

In der Figur 1 ist ein Personenkraftfahrzeug 1 mit einer Windschutzscheibe 2, einem Fahrzeugdach 3 und einer Rückscheibe 4 in einer Aufsicht auf das Fahrzeug dargestellt. In dem Fahrzeugdach 3 ist eine Kameravorrichtung 5 angeordnet, die unterhalb des Fahrzeugdachs 3 durch das Fahrzeugdach 3 verdeckt und daher gestrichelt in der Figur 1 eingezeichnet ist. An einer Vorderseite 6 des Fahrzeugs ist hinter einer Kühlerabdeckung 7 eine Radarvorrichtung 8 und eine Kameravorrichtung 9 angeordnet. An einer linken Seitenfläche 10 des Fahrzeugs ist ein linker Außenspiegel 12 mit einer ersten Außenspiegelkamera 13 angeordnet. An einer rechten Seitenfläche 11 ist ein rechter Außenspiegel 14 mit einer zweiten Außenspiegelkamera 15 angeordnet. Ferner ist an der linken Seitenfläche 10 ein Abstandssensor 16 und an der rechten Seitenfläche 11 ein Abstandssensor 17 angeordnet. In einer Rückseite 18 des Fahrzeugs sind rückwärtige Abstandssensoren 19 angeordnet. Unterhalb der Windschutzscheibe 2 ist vor einem Fahrer ein Lenkrad 20 mit physiologischen Sensoren 21 angeordnet, die sich in einem Griffbereich des Lenkrads 20 befinden. Zwischen einem Fahrer und einem Beifahrer sind in einem mittleren Bereich des Fahrzeugs elektrische Geräte 22 angeordnet. Im Bereich des Dashboards ist gestrichelt eine Recheneinheit 23 eingezeichnet, die der Auswertung der in dem Personenkraftfahrzeug 1 angeordneten Sensoren dient. Eine Verbindung von der Recheneinheit 23 zu den einzelnen Sensoren ist in der Figur 1 nicht dargestellt. Eine Ausgabe von Warnungen erfolgt über Lautsprecher 24, vorzugsweise über Lautsprecher eines Autoradios, und/oder über eine Anzeige 25, die vorzugsweise in einem Kombiinstrument vor dem Fahrer angeordnet ist.

Die physiologischen Sensoren 21 werden während des Steuerns des Personenkraftfahrzeugs 1 bei einer Berührung des Lenkrads 20 von einem Fahrer berührt, wobei eine Pulsfrequenz vorzugsweise über eine kapazitive Messung und die Körpertemperatur vorzugsweise über eine Infrarotmessung bestimmt wird. Diese Daten werden anschließend an die Recheneinheit 23 weitergeleitet, in der eine Speichereinheit mit Grenzwerten angeordnet ist. Die Recheneinheit 23 vergleicht die Daten der physiologischen Sensoren mit den gespeicherten Grenzwerten und legt in Abhängigkeit von dem Vergleich fest, ob der Fahrer wach oder schläfrig ist. Ist der Fahrer schläfrig, so wird ihm eine niedrigere Aufmerksamkeit zugewiesen. Andernfalls wird anhand dieses Kriteriums keine niedrige Aufmerksamkeit des Fahrers festgestellt. Weiterhin wird ein Bild des Fahrers von der Kameravorrichtung 5 aufgenommen und an die Recheneinheit 23 weitergeleitet. Wird nun vorzugsweise durch den Vergleich mehrerer Bilder festgestellt, dass der Fahrer entweder seine Augen geschlossen hat, die Lidschlagsfrequenz sehr hoch ist oder dass der Kopf des Fahrers gesenkt ist, so wird eine Aufmerksamkeit des Fahrers als niedrig ermittelt. Weiterhin wird aus der Kopfposition des Fahrers eine Blickrichtung des Fahrers ermittelt. Für alle anderen Richtungen außer der Blickrichtung des Fahrers, die das von dem Fahrer wahrnehmbare Blickfeld zumindest nahezu vollständig einschließt, wird dabei die Aufmerksamkeit des Fahrers als eine niedrige Aufmerksamkeit festgelegt. Für die Blickrichtung des Fahrers kann eine Aufmerksamkeit festgelegt werden, sofern nicht z.B. eine zuvor festgestellte Ermüdung des Fahrers dem entgegensteht. In einem bevorzugten Ausführungsbeispiel wird die Aufmerksamkeit des Fahrers digital zwischen "hoher Aufmerksamkeit" und "niedrigerer Aufmerksamkeit" festgelegt. Weiterhin ist auch möglich, die Größe der Aufmerksamkeit weiter zu unterteilen oder auf einer kontinuierlichen Skala festzulegen. Die Aufmerksamkeit des Fahrers wird zunächst für den Fahrer insgesamt und außerdem für verschiedene mögliche Blickrichtungen des Fahrers jeweils einzeln festgelegt. Wird z.B. über die physiologischen Sensoren 21 oder mittels Bildauswertung durch die Kameravorrichtung festgestellt, dass der Fahrer schläft, so kann die Aufmerksamkeit für keine der Blickrichtungen hoch sein. Wird dagegen festgestellt, dass der Fahrer nicht schläft, so kann die Aufmerksamkeit für maximal eine Blickrichtung des Fahrers hoch sein. Blickrichtungen können in einem bevorzugten Ausführungsbeispiel als die Blickrichtungen "nach vorne" in Richtung der Vorderseite 6, "nach links" in Richtung der linken Seitenfläche 10, "nach rechts" in Richtung der rechten Seitenfläche 11 und "nach hinten" in Richtung der Rückseite 18 des Fahrzeugs festgelegt sein. Weiterhin wird eine Bedienung der elektrischen Geräte 22 erfasst. In einem bevorzugten Ausführungsbeispiel sind die elektrischen Geräte 22 als eine Autoradiovorrichtung, eine Navigationsvorrichtung und eine Mobiltelefoneinheit ausgeführt. Sobald die Mobiltelefoneinheit betätigt wird, wird die Aufmerksamkeit des Fahrers auf einen niedrigen Wert festgelegt. Werden an der Autoradiovorrichtung und an der Navigationsvorrichtung in einem bevorzugten Ausführungsbeispiel in einem Zeitraum von 20 Sekunden mehr als zwei Betätigungen von Bedienelementen erfasst, also eine Bedienfrequenz größer 0,1 Hz, so wird ebenfalls eine niedrige Aufmerksamkeit des Fahrers festgelegt.

Weitere Sensoren, die Fahrzeugfunktionen wie den Öldruck, die Kühlwassertemperatur oder den Bremskreislauf überwachen sind in der Figur 1 nicht eingezeichnet. Derartige Fahrzeugfehlfunktionen treten im Regelfall sehr selten auf und sind auch im Falle eines aufmerksamen Fahrers für diesen wichtig, da im allgemeinen eine Anzeige lediglich über kleine Warnleuchten in der Anzeige 25 erfolgt. Eine zusätzliche, akustische Warnung wird daher unabhängig von der Aufmerksamkeit des Fahrers über die Lautsprecher 24 ausgegeben. Die Lautsprecher 24 sind dabei in einem bevorzugten Ausführungsbeispiel als Lautsprecher der Autoradiovorrichtung ausgeführt, die ein Teil der elektrischen Geräte 22 ist.

Über die Kameravorrichtung 9 wird der Fahrweg des Fahrzeugs beobachtet. Ein Bild des Fahrwegs wird an die Recheneinheit 23 übermittelt, die feststellt, ob sich das Personenkraftfahrzeug 1 noch auf dem Fahrweg befindet, in dem eine Position von Fahrbahnbegrenzungen und die Position des Personenkraftfahrzeugs 1 zu den Fahrbahnbegrenzungen bestimmt wird. Wird festgestellt, dass der Fahrer aufmerksam ist, so wird lediglich bei einer längeren Überschreitung der Fahrbahnbegrenzungen eine akustische Warnung an den Fahrer ausgegeben. Wird dagegen von der Recheneinheit 23 festgestellt, dass der Fahrer nur kurzzeitig die Fahrbahnbegrenzungen überschreitet, so wird eine Warnung unterdrückt. Die Kameravorrichtung 9 ist neben der Radarvorrichtung 8 hinter der Kühlerabdeckung 7 angeordnet, so dass weder die Kameravorrichtung 9, noch die Radarvorrichtung 8 für einen Betrachter außerhalb des Fahrzeugs sichtbar sind. Die Radarvorrichtung 8 überwacht den Abstand zu einem vorhergehenden Fahrzeug bzw. zu einem vor dem Fahrzeug liegenden Hindernis. Bei einem aufmerksamen Fahrer unterbleibt eine Warnung bis zu einem Abstand von 75 % des sogenannten "Halben Tachoabstandes", bei dem aus der gefahrenen Geschwindigkeit in Kilometern durch Division durch 2 ein vorzugsweise einzuhaltender Abstand ermittelt wird. Bei 100 km/h sind dies z.B. 50 m. Wird von der Recheneinheit 23 festgestellt, dass der Fahrer aufmerksam ist, erfolgt eine Warnung erst bei einem Unterschreiten eines Abstandes von 38 m, sofern nicht durch die Recheneinheit 23 der Abstand automatisch durch ein Einwirken auf den Antriebsstrang bzw. auf die Bremsen gesteuert wird. Wird dagegen eine geringere Aufmerksamkeit des Fahrers festgestellt, so wird bereits bei einem Unterschreiten eines Abstands von 50 m der Fahrer gewarnt. Unter anderem wird eine verringerte Aufmerksamkeit festgestellt, wenn der Fahrer nicht in Richtung der Vorderseite 6 des Fahrzeugs schaut. Die erste Außenspiegelkamera und die zweite Außenspiegelkamera 15 dienen der Überwachung eines sogenannten toten Winkels des Fahrzeugs, also einem Bereich, der nicht in den Außenspiegeln 12 bzw. 14 des Fahrzeugs für einen Fahrer ersichtlich ist. Wird z.B. durch eine Betätigung eines in Figur 1 nicht dargestellten Blinkerhebels festgestellt, dass ein Fahrer die Fahrbahn wechseln will, und wird von den Außenspiegelkameras 13, 15 ein Fahrzeug in dem jeweiligen, toten Winkel ermittelt, so erfolgt bei einer niedrigen Aufmerksamkeit des Fahrers eine Warnung, insbesondere wenn der Fahrer nicht in Richtung der linken Seitenfläche 10 bzw. der rechten Seitenfläche 11 des Fahrzeugs schaut.

Parkt ein Fahrer rückwärts ein, so wird von den Abstandssensoren 16, 17, 19 ein Abstand zu möglichen Hindernissen gemessen. Die Abstandssensoren 16, 17, 19 sind vorzugsweise als Ultraschallsensoren ausgeführt, können aber ferner auch als elektromagnetische Sensoren, z.B. Mikrowellensensoren, ausgeführt sein. Wird eine hohe Aufmerksamkeit des Fahrers in Richtung der Rückseite 18 mittels Auswertung seiner Blickrichtung festgestellt, so erfolgt eine Warnung vorzugsweise erst bei einem von den Abstandssensoren 16, 17, 19 zu einem Hindernis ermittelten Abstand von 50 cm oder weniger. Wird dagegen eine niedrige Aufmerksamkeit festgestellt oder wird festgestellt, dass der Fahrer nach vorne sieht, so wird eine Warnung an den Fahrer bei einem bevorzugten Ausführungsbeispiel bereits bei einer Unterschreitung von einem Abstand von beispielsweise 2 m zu einem von den Abstandssensoren 16, 17, 19 ermittelten Hindernis ausgegeben.

Kritische Situationen für das Fahrzeug können z.B. akute Fahrzeugdefekte, so z.B. ein Defekt im Bremssystem, ein geringer Abstand des Fahrzeugs zu einem Hindernis, eine Überschreitung einer Fahrbahnbegrenzungsmarkierung oder ein zu geringer Abstand zu einem vorausfahrenden oder zu einem nebenher fahrenden Fahrzeug sein. Eine Ermittlung erfolgt jeweils durch geeignete Sensoren.

In der Figur 2 ist eine Schaltung von Fahrzeugsensoren zu der Recheneinheit 23 dargestellt. In der Recheneinheit 23 ist eine Speichereinheit 31 zum Abspeichern von Grenzwerten angeordnet, mit denen die von den Fahrzeugsensoren ermittelten Werte verglichen werden. Mittels Vergleich zu den in der Speichereinheit 31 abgelegten Grenzwerten wird von der Recheneinheit 23 entschieden, ob der Fahrer aufmerksam ist oder nicht. Legt die Recheneinheit 23 fest, dass eine Warnung ausgegeben wird, so wird der Befehl zur Ausgabe einer Warnung an eine Ausgabeeinheit 32 weitergeleitet. Mittels der Ausgabeeinheit 32 wird eine Warnung an eine Anzeigeeinheit 33 weitergeleitet, in der die Warnung zur Anzeige gelangt. Die Anzeigeeinheit 33 ist vorzugsweise in einer für den Fahrer gut sichtbaren Stelle ausgeführt, z.B. in der Form der Anzeige 25 gemäß der Figur 1. In einem bevorzugten Ausführungsbeispiel wird durch eine Sprachbildungseinheit 34 die Warnung in eine Sprachausgabe umgewandelt, die ebenso wie ein Warnton über einen Lautsprecher 24 ausgegeben wird. Mit der Recheneinheit 23 ist die Kameravorrichtung 5, die Radarvorrichtung 8, die Kameravorrichtung 9, eine erste Außenspiegelkamera 13, eine zweite Außenspiegelkamera 15, die Abstandssensoren 16, 17, 19, die physiologischen Sensoren 21, die elektrischen Geräte 22 und in der Figur 1 nicht dargestellte Fahrzeugsensoren, z.B. eine Kühlmittelkontrolle 35 und eine Bremssystemkontrolle 36 verbunden.

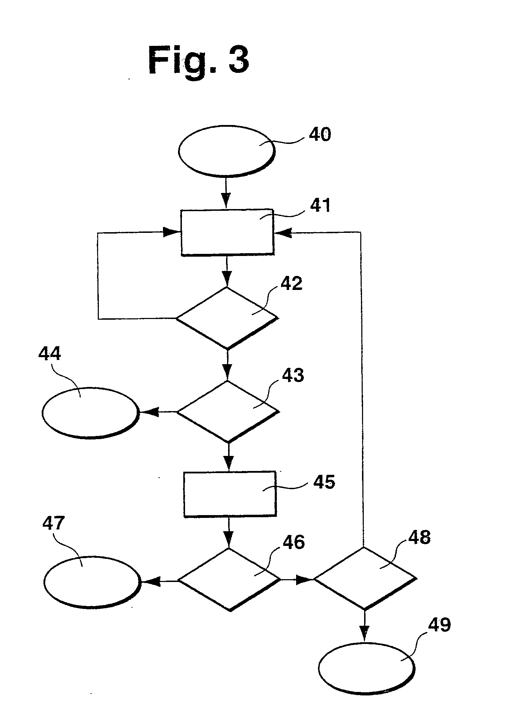

In der Figur 3 ist ein erstes Ausführungsbeispiel für einen erfindungsgemäßen Verfahrensablauf dargestellt. Ausgehend von einem Initialisierungsschritt 40, in dem das erfindungsgemäße Verfahren gestartet wird, z.B. bei einem Start des Personenkraftfahrzeugs 1, wird zu einem Ermittlungsschritt 41 weiter verzweigt. In dem Ermittlungsschritt 41 werden die Radarvorrichtung 8, die Kameravorrichtung 9, die Außenspiegelkameras 13, 15 und die Abstandssensoren 16, 17, 19 dahingehend abgefragt, ob eine kritische Situation vorliegt. Dies wird in einem anschließenden ersten Prüfschritt 42 überprüft. Liegt keine kritische Situation vor, so wird zu dem Ermittlungsschritt 41 zurückverzweigt. Wird dagegen festgestellt, dass eine kritische Situation vorliegt, wird zu einem zweiten Prüfschritt 43 weiterverzweigt. In dem zweiten Prüfschritt 43 wird überprüft, ob die dem Ermittlungsschritt 41 ermittelte, kritische Situation eine hohe Priorität aufweist. Dies ist z.B. der Fall, wenn der Abstand der Abstandssensoren 16, 17, 19 geringer als 50 cm ist, wenn das Bremssystem ausgefallen ist, wenn die Kühlwassertemperatur überschritten wird oder wenn der Abstand zu einem vorrausfahrenden Fahrzeug weit unterhalb des halben Tachoabstandes liegt. Wird eine solche kritische Situation festgestellt, liegt eine Warnung hoher Priorität vor. Es wird daher zu einem Ausgabeschritt 44 weiterverzeigt, in dem die Warnung hoher Priorität über die Ausgabeeinheit 32 mittels der Lautsprecher 24 und der Anzeigeeinheit 33 ausgegeben wird. Wird dagegen in dem zweiten Prüfschritt 43 festgestellt, dass keine solche Warnung hoher Priorität vorliegt, wird zu dem Aufmerksamkeitsermittlungsschritt 45 weiterverzweigt, in dem die Aufmerksamkeit des Fahrers über den für die in dem Ermittlungsschritt 41 ermittelte kritische Situation relevanten Bereich bestimmt wird. In dem anschließenden, dritten Prüfschritt 46, wird überprüft, ob die ermittelte Aufmerksamkeit niedrig oder hoch ist. Ist die ermittelte Aufmerksamkeit niedrig, so wird zu einem Ausgabeschritt 47 weiterverzweigt, in dem eine Warnung in gleicher Weise wie bei dem Ausgabeschritt 44 ausgegeben wird. Wird dagegen in dem dritten Prüfschritt 46 festgestellt, dass die Aufmerksamkeit des Fahrers für den entsprechenden Bereich hoch ist, so wird zu einem vierten Prüfschritt 48 weiterverzweigt. In dem vierten Prüfschritt 48 wird überprüft, ob für die gleiche, ermittelte, kritische Situation der vierte Prüfschritt 48 bereits mehrfach erreicht wurde. Dies ist z.B. dann der Fall, wenn ein Fahrer längerfristig die Fahrbahnbegrenzung mit dem Fahrzeug überschreitet. In diesem Fall wird zu einem Ausgabeschritt 49 weiterverzweigt, in dem eine Warnung ebenso wie in dem Ausgabeschritt 44 ausgegeben wird. Ergibt dagegen der vierte Prüfschritt 48, dass eine in dem Ermittlungsschritt 41 ermittelte, kritische Situation das erste Mal erreicht wird, so wird zu dem Ermittlungsschritt 41 weiterverzweigt und im weiteren Verlauf wird überprüft, ob die kritische Situation weiterhin besteht. Um ein wiederholtes Auftreten einer kritischen Situation ermitteln zu können, wird in dem vierten Prüfschritt 48 für kritische Situationen ein in der Figur 3 nicht dargestellter Zähler inkrementiert, der nach einer vorgegebenen Zeit zurückgesetzt wird, wenn die kritische Situation nicht erneut aufgetreten ist bzw. nicht mehr besteht.

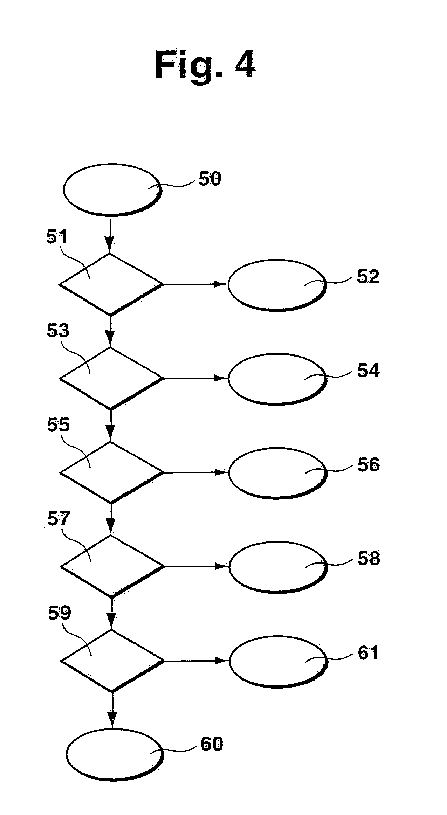

In der Figur 4 ist der Aufmerksamkeitsermittlungsschritt 45 aus der Figur 3 im Detail dargestellt. Ausgehend von einem Initialisierungsschritt 50 wird in einem ersten Prüfschritt 51 geprüft, ob die physiologischen Sensoren 21 einen Hinweis darauf geben, dass der Fahrer ermüdet ist. Wird eine Ermüdung festgestellt, z.B. anhand einer niedrigen Körpertemperatur oder eines niedrigen Pulsschlages, wird zu einem ersten Festlegungsschritt 52 weiterverzweigt, dem die Aufmerksamkeit des Fahrers als niedrig festgelegt wird. In einer bevorzugten Ausführung sind hierbei der Speichereinheit 31 spezielle physiologische Kenndaten des Fahrers nicht flüchtig ablegbar. Wird dagegen festgestellt, dass die physiologischen Daten in einem Nennwertbereich liegen und keinen Rückschluss auf eine Müdigkeit des Fahrers geben, so wird zu einem zweiten Prüfschritt 53 weiterverzweigt. In dem zweiten Prüfschritt 53 wird anhand einer Auswertung des von der Kameravorrichtung 5 ermittelten Bilds des Fahrers festgestellt, ob der Fahrer ermüdet ist. Dies erfolgt vorzugsweise über die Auswertung der Lidschlagsfrequenz bzw. über eine Auswertung, ob die Augen des Fahrers geschlossen sind. Wird dies festgestellt, so wird zu einem zweiten Festlegungsschritt 54 verzweigt, in dem ebenfalls festgelegt wird, dass die Aufmerksamkeit des Fahrers niedrig ist. Andernfalls wird zu einem dritten Prüfschritt 55 weiterverzweigt, in dem überprüft wird, ob das Mobiltelefon aktiviert ist. Ist dies der Fall, so wird ebenfalls eine niedrige Aufmerksamkeit des Fahrers in einem dritten Festlegungsschritt 56 festgelegt. Wird dagegen festgestellt, dass das Mobiltelefon nicht benutzt wird, so wird zu einem vierten Prüfschritt 57 weiterverzweigt, in dem überprüft wird, ob eine erhöhte Bedienungshäufigkeit der übrigen elektrischen Geräte 22, so z.B. der Navigationsvorrichtung oder der Autoradiovorrichtung, in einem vorgegebenen Zeitintervall erfolgt ist. Wird festgestellt, dass eine solche erhöhte Bedienfrequenz erfolgt ist, so wird ebenfalls zu einem vierten Feststellungsschritt 58 weiterverzweigt in dem eine niedrige Aufmerksamkeit des Fahrers ermittelt wird. Wird keine erhöhte Bedienfrequenz festgestellt, so wird zu einem fünften Prüfschritt 59 weiterverzweigt, in dem überprüft wird, ob die Blickrichtung des Fahrers mit der Richtung übereinstimmt, die für die im Ermittlungsschritt 41 ermittelte kritische Situation wichtig ist. Ist die kritische Situation z.B. ein verringerter Abstand des Fahrzeugs zu einem hinter ihm befindlichen Hindernis, so wird in dem Fall, dass der Fahrer auch nach hinten schaut, eine hohe Aufmerksamkeit des Fahrers in einem an den fünften Prüfschritt 59 anschließenden fünften Festlegungsschritt 60 ermittelt. Wird dagegen festgestellt, dass die Blickrichtung, die für die kritische Situation wichtig ist, mit der Blickrichtung des Fahrers nicht übereinstimmt, so wird zu einem sechsten Festlegungsschritt 61 weiterverzweigt, in dem eine niedrige Aufmerksamkeit des Fahrers ermittelt wird.

Gehen in der Ausgabeeinheit 32 mehrere Warnungen zur Ausgabe ein, so erfolgt in einem bevorzugten Ausführungsbeispiel eine Ausgabe derjenigen Warnung zuerst, die für eine Richtung relevant ist, in die der Fahrer nicht schaut gegenüber einer Warnung für eine Richtung, in die der Fahrer gerade seinen Blick gerichtet hat. Hierdurch wird gewährleistet, dass Warnungen für kritische Situationen zuerst ausgegeben werden, die sich nicht in einem Blickfeld des Fahrers befinden.

## Patentansprüche

1. Verfahren zur Warnung eines Fahrers eines Fahrzeugs, wobei von Fahrzeugsensoren eine kritische Situation erfasst wird, wobei eine Aufmerksamkeit des Fahrers ermittelt wird, wobei eine Warnung vor der kritischen Situation in Abhängigkeit von der Aufmerksamkeit des Fahrers ausgegeben wird, wobei eine Bedienung und/oder Benutzung von in dem Fahrzeug angeordneten Geräten durch den Fahrer erfasst wird und wobei eine niedrige Aufmerksamkeit des Fahrers ermittelt wird, wenn eines der Geräte benutzt wird und/oder wenn ein vorgegebener Wert einer Bedienfrequenz eines der Geräte überschritten wird, **dadurch gekennzeichnet, dass** eine Warnung nur bei einer niedrigen Aufmerksamkeit des Fahrers ausgegeben wird.

2. Verfahren nach Anspruch 1, **dadurch gekennzeichnet, dass** durch eine Kameravorrichtung ein Bild des Fahrers erfasst wird, dass das Bild von der Recheneinheit verarbeitet wird und aus dem Bild eine Aufmerksamkeit des Fahrers ermittelt wird.

3. Verfahren nach Anspruch 2, **dadurch gekennzeichnet, dass** die Aufmerksamkeit des Fahrers anhand der Blickrichtung, der Lidschlagsfrequenz und/oder der Kopfposition ermittelt wird.

4. Verfahren nach einem der Ansprüche 2-3, **dadurch gekennzeichnet, dass** der Blickrichtung des Fahrers eine hohe Aufmerksamkeit zugewiesen wird und dass übrigen Richtungen eine niedrige Aufmerksamkeit zugewiesen wird.

5. Verfahren nach einem der vorhergehenden Ansprüche, **dadurch gekennzeichnet, dass** die Warnung zumindest akustisch ausgegeben wird.

6. Vorrichtung zur Durchführung des Verfahren nach einem der vorhergehenden Ansprüche mit Fahrzeugsensoren und mit mindestens einem in dem Fahrzeug angeordneten Gerät, wobei die Vorrichtung derart ausgelegt ist, dass die Fahrzeugsensoren eine kritische Situation erfassen, dass eine Aufmerksamkeit des Fahrers ermittelt wird, dass eine Warnung vor der kritischen Situation in Abhängigkeit von der Aufmerksamkeit des Fahrers ausgegeben wird, dass eine Bedienung und/oder Benutzung des mindestens einen Geräts durch den Fahrer erfasst wird und dass eine niedrige Aufmerksamkeit des Fahrers ermittelt wird, wenn eines der Geräte benutzt wird und/oder wenn ein vorgegebener Wert einer Bedienfrequenz eines der Geräte überschritten wird, **dadurch gekennzeichnet, dass** die Vorrichtung eine Warnung nur bei einer niedrigen Aufmerksamkeit des Fahrers ausgibt.

7. Vorrichtung nach Anspruch 6, **dadurch gekennzeichnet, dass** die Fahrzeugsensoren eine Einparkhilfevorrichtung, eine Vorrichtung zur Abstandshaltung, eine Vorrichtung zur Erkennung von Hindernissen in einem toten Blickwinkel und/oder eine Überwachungsvorrichtung der Fahrbahnbegrenzung ist und dass das in dem Fahrzeug angeordnete Gerät ein Autoradio, eine Navigationsvorrichtung oder ein Mobiltelefon ist.

## Claims

1. Method for warning a driver of a vehicle, a critical situation being sensed by vehicle sensors and the attentiveness of the driver being determined, a warning about the critical situation being issued as a function of the attentiveness of the driver the driver operating and/or using devices arranged in the vehicle being sensed, and a low level of attentiveness of the driver being determined if one of the devices is used and/or if a predefined value of an operating frequency of one of the devices is exceeded, **characterized in that** a warning is issued only if there is a low level of attentiveness of the driver.

2. Method according to Claim 1, **characterized in that** a camera device senses an image of the driver, **in that** the image is processed by the computing unit and the attentiveness of the driver is determined from the image.

3. Method according to Claim 2, **characterized in that** the attentiveness of the driver is determined by means of the viewing direction, the frequency of blinking and/or the position of the head.

4. Method according to one of Claims 2 and 3, **characterized in that** a high level of attentiveness is assigned to the viewing direction of the driver, and **in that** a low level of attentiveness is assigned to the other directions.

5. Method according to one of the preceding claims, **characterized in that** the warning is issued at least audibly.

6. Device for carrying out the method according to one of the preceding claims with vehicle sensors and with at least one device which is arranged in the vehicle, the device being configured in such a way that the vehicle sensors sense a critical situation, that the attentiveness of the driver is determined, that a warning about the critical situation is issued as a function of the attentiveness of the driver, that the driver operating and/or using at least one device is sensed, and that a low level of attentiveness of the driver is determined if one of the devices is used and/or if a predefined value of an operating frequency of one of the devices is exceeded, **characterized in that** the device issues a warning only if there is a lower level of attentiveness of the driver.

7. Device according to Claim 6, **characterized in that** the vehicle sensors are a parking aid device, a device for maintaining inter-vehicle distance, a device for detecting obstacles in a blind angle and/or a device for monitoring the boundaries of the carriageway, and **in that** the device which is arranged in the vehicle is a car radio, a navigation device or a mobile telephone.

## Revendications

1. Procédé pour avertir un conducteur d'un véhicule, selon lequel des capteurs du véhicule saisissant une situation critique on détermine une vigilance du conducteur, on émet un avertissement concernant la situation critique en fonction de la vigilance du conducteur, on saisit une commande et/ou une utilisation d'appareils disposés dans le véhicule par le conducteur et on détermine et une faible vigilance du conducteur, lorsqu'un des appareils est utilisé et/ou lorsqu'une valeur prédéterminée d'une fréquence de commande d'un des appareils est dépassée,
**caractérisé en ce qu'**
on émet un avertissement uniquement lorsque la vigilance du conducteur est faible.

2. Procédé selon la revendication 1,
**caractérisé en ce qu'**
on détecte une image du conducteur à l'aide d'un dispositif de caméra, on traite l'image avec une unité de calculateur et on détermine la vigilance du conducteur à partir de l'image.

3. Procédé selon la revendication 2,
**caractérisé en ce qu'**
on détermine la vigilance du conducteur à l'aide de la direction du regard, de la fréquence de battement des paupières et/ou de la position de la tête.

4. Procédé selon l'une quelconque des revendications 2 et 3,
**caractérisé en ce qu'**
on accorde une grande attention à la direction du regard du conducteur et on accorde peu d'attention à d'autres directions.

5. Procédé selon l'une quelconque des revendications précédentes,
**caractérisé en ce qu'**
on émet l'avertissement au moins de façon acoustique.

6. Dispositif pour la mise en oeuvre du procédé selon l'une quelconque des revendications précédentes, avec des capteurs du véhicule et avec au moins un appareil disposé dans le véhicule, les capteurs du véhicule saisissant une situation critique, selon lequel on détermine une vigilance du conducteur, on émet un avertissement contre la situation critique en fonction de la vigilance du conducteur, on saisit une commande et/ou une utilisation d'au moins un appareil par le conducteur, et on détermine une faible vigilance du conducteur, lorsque l'un des appareils est utilisé et/ou lorsqu'une valeur prédéterminée d'une fréquence de commande d'un des appareils est dépassée,
**caractérisé en ce que**
le dispositif émet un avertissement uniquement lorsque la vigilance du conducteur est faible.

7. Dispositif selon la revendication 6,
**caractérisé en ce que**
les capteurs du véhicule sont un dispositif d'aide au parcage, un dispositif de maintien de distance, un dispositif de reconnaissance d'obstacles dans un angle mort et/ou un dispositif de surveillance des limites de la chaussée, et le dispositif disposé dans le véhicule est un autoradio, un dispositif de navigation ou un téléphone mobile.
